# EUROPÄISCHE PATENTSCHRIFT

(11) **EP 2 580 859 B1**
(45) Veröffentlichungstag und Bekanntmachung des Hinweises auf die Patenterteilung: **16.08.2017**
(21) Anmeldenummer: 10723132.6
(22) Anmeldetag: 11.06.2010
(51) Int. Cl.: H02M 7/757, H02M 7/487, H02M 1/32, H02J 3/18

(54) **DOPPELMODUL FÜR EINEN MODULAREN MEHRSTUFENUMRICHTER**
DOUBLE MODULE FOR A MODULAR MULTI-STAGE CONVERTER
DOUBLE MODULE POUR UN REDRESSEUR MODULAIRE À PLUSIEURS ÉTAGES

(43) Veröffentlichungstag der Anmeldung: 17.04.2013
(73) Patentinhaber: Siemens Aktiengesellschaft, 80333 München (DE)
(72) Erfinder: ECKEL, Hans-Günter, 18059 Rostock (DE); GAMBACH, Herbert, 91080 Uttenreuth (DE)
(86) Internationale Anmeldenummer: PCT/EP2010/058234
(87) Internationale Veröffentlichungsnummer: WO 2011/154049

(56) Entgegenhaltungen:
- EP-B1- 1 920 526
- SINHA G ET AL: "Fault protection in a multilevel inverter implementation of a static condenser", INDUSTRY APPLICATIONS CONFERENCE, 1995. THIRTIETH IAS ANNUAL MEETING, IAS '95., CONFERENCE RECORD OF THE 1995 IEEE ORLANDO, FL, USA 8-12 OCT. 1995, NEW YORK, NY, USA,IEEE, US, Bd. 3, 8. Oktober 1995 (1995-10-08), Seiten 2557-2564, XP010193274, DOI: DOI:10.1109/IAS.1995.530628 ISBN: 978-0-7803-3008-5
- BHATTACHARYA ED - ANONYMOUS: "Series Connected IGCT based High Power Three-Level Neutral Point Clamped Voltage Source Inverter Pole for FACTS Applications", POWER ELECTRONICS SPECIALISTS CONFERENCE, 2005. PESC '05. IEEE 36TH, IEEE, PISCATAWAY, NJ, USA, 1. Januar 2005 (2005-01-01), Seiten 2315-2321, XP031000456, DOI: DOI:10.1109/PESC.2005.1581955 ISBN: 978-0-7803-9033-1

## Beschreibung

Die Erfindung betrifft ein zweipoliges Submodul für einen Umrichter im Hochspannungsbereich mit einem ersten Energiespeicher, einer parallel zum ersten Energiespeicher geschalteten ersten Halbleiterreihenschaltung aus einer ersten und einer zweiten an- und abschaltbaren Leistungshalbleiterschalteinheit, einer ersten Anschlussklemme, die mit dem Potenzialpunkt zwischen der ersten und zweiten Leistungshalbleiterschalteinheit verbunden ist, einem zweiten Energiespeicher in Reihe zum ersten Energiespeicher, einer parallel zum zweiten Energiespeicher angeordneten zweiten Halbleiterreihenschaltung aus einer dritten und vierten an- und abschaltbaren Leistungshalbleiterschalteinheit und einer zweiten Anschlussklemme, die mit dem Potenzialpunkt zwischen der dritten und vierten Leistungshalbleitereinheit verbunden ist.

Die Erfindung betrifft ferner einen Umrichter für den Hochspannungsbereich zum Umrichten einer elektrischen Spannung oder eines elektrischen Stromes mit Phasenmodulen, die sich zwischen zwei Gleichspannungsanschlüssen erstrecken und jeweils einen Wechselspannungsanschluss zum Anschluss einer Phase eines Wechselspannungsnetzes aufweisen, wobei wenigstens eines der Phasenmodule eine Reihenschaltung von zweipoligen Submodulen aufweist.

Ein solches Submodul und ein solcher Umrichter sind aus der EP 1 920 526 B1 bereits bekannt. Der dort beschriebene Umrichter ist ein so genannter modularer Mehrstufenumrichter und verfügt über Phasenmodulbausteine, die sich zwischen zwei gegensinnig polarisierten Gleichspannungsanschlüssen erstrecken und jeweils einen Wechselspannungsanschluss zum Anschluss einer Phase eines Wechselspannungsnetzes aufweisen. Zwischen seinem Wechselspannungsanschluss und jedem seiner Gleichspannungsanschlüsse bildet jeder. Phasenmodulbaustein zwei Ventilzweige aus. Jeder Ventilzweig verfügt wiederum über eine Reihenschaltung aus zweipoligen Submodulen. Jedes Submodul ist mit zwei Energiespeichern ausgerüstet, die in Reihe zueinander geschaltet sind. Dabei ist jeder Energiespeicher parallel zu einer ersten beziehungsweise zweiten Reihenschaltung aus jeweils zwei ansteuerbaren Leistungshalbleitern angeordnet, denen jeweils eine Freilaufdiode gegensinnig parallel geschaltet ist. Bei diesen an- und abschaltbaren Leistungshalbleiterschaltern handelt es sich beispielsweise um IGBTs, GTOs oder dergleichen. Die beiden Anschlussklemmen des Submoduls sind jeweils mit einem Potenzialpunkt verbunden, der zwischen den Leistungshalbleiterschaltern der ersten beziehungsweise zweiten Halbleiterreihenschaltung liegt. Ferner ist ein Mittenabgriff oder Verbindungszweig offenbart, der den Potenzialpunkt zwischen den Energiespeichern mit dem Potenzialpunkt zwischen den Halbleiterreihenschaltungen verbindet. Die an- und abschaltbaren Leistungshalbleiterschalter sind mit einer Regelung verbunden, so dass in den Ausgangsklemmen die an dem Energiespeicher abfallende Spannung oder die an beiden Energiespeichern abfallende Spannung oder aber eine Nullspannung erzeugbar ist.

Das vorbekannte Submodul weist gegenüber einem einfachen Submodul mit lediglich zwei abschaltbaren Leistungshalbleiterschaltern und einem Energiespeicher verschiedene Vorteile auf. So kann die zwischen den Anschlussklemmen abfallende Spannung eines Submoduls erhöht werden, so dass die Anzahl der Submodule bei Hochspannungsanwendungen reduziert werden kann. Dies erleichtert beispielsweise die Regelung des Umrichters. Durch die erhöhte Spannung an den Klemmen erhöhen sich jedoch auch die Sicherheitsanforderungen, die an die einzelnen Submodule gestellt werden. So ist die Gefahr so genannter Querzündungen erhöht, die auftreten, wenn die zwischen den Anschlussklemmen angeordneten Leistungshalbleiterschalter durchlegieren, also leitend werden. Ein solcher Kurzschluss an den Anschlussklemmen hat einen hohen Kurzschlussstrom im Gefolge, der irreparable Schäden am Submodul verursachen kann.

Im Artikel "Fault protectioh in a multilevel inverter implementation of a static condenser" von Sinha G. et al., Industry Applications Conference, 1995, Thirteenth IAS Annual Meeting, IAS'95, conference record of the 1995 IEEE Orlando, Fl., USA 8-12 Oct, N.Y., USA, IEEE, Bd. 3, 8. Oktober 1995, Seiten 2557-2564, ist ein diodengeklemmter 5-Stufen-Umrichter beschrieben. Der Umrichter weist drei Phasenmodule auf, wobei jedes Phasenmodul einen Wechselspannungsanschluss zum Anschluss an eine Phasenleitung eines Wechselspannungsnetzes aufweist. Jedes Phasenmodul umfasst ferner vier Speicherkondensatoren sowie acht Leistungshalbleiterschalteinheiten aus einem Leistungshalbleiterschalter und einer parallel geschalteten Diode. Der Wechselspannungsanschluss ist mit einem zwischen der vierten und fünften Leistungshalbleiterschalteinheit liegenden Potenzialpunkt verbunden. Zwischen den Speicherkondensatoren liegende Potenzialpunkte sind zusätzlich mittels Verbindungszweige mit weiteren Dioden mit Potenzialpunkten verbunden, die zwischen den Leistungshalbleiterschalteinheiten liegen. Die Phasenmodule des Umrichters umfassen hierbei allerdings keine Reihenschaltung von zweipoligen Submodulen.
Ein weiterer diodengeklemmter Mehrstufen-Umrichter ist in dem Artikel "Series connected IGCT based high-power three-level neutral point clamped voltage source inverter pole for FACTS applications" von Ed Bhattacharya, Power Electronics Specialists Conference, 2005, PESC'05, IEEE 36th IEEE, Piscataway, NJ, USA, 1.1.2005, Seiten 2315-2321 offenbart. Dort ist der Umrichter als ein 3-Stufen-Umrichter ausgebildet.

Aufgabe der Erfindung ist es daher, die Gefahr des Auftretens von Querzündungen bei einem gattungsgemäßen zweipoligen Submodul herab zu setzen.

Die Erfindung löst diese Aufgabe durch eine Verbindungsschalteinheit, die zwischen der ersten Halbleiterreihenschaltung und der zweiten Halbleiterreihenschaltung angeordnet ist, einen ersten Verbindungszweig, der eine erste Verbindungszweigdiode aufweist und den Potenzialpunkt zwischen der Verbindungsschalteinheit und der zweiten Leistungshalbleiterschalteinheit mit dem Potenzialpunkt zwischen den Energiespeichern verbindet, und einen zweiten Verbindungszweig, der eine zweite Verbindungszweigdiode aufweist und den Potenzialpunkt zwischen der Verbindungsschalteinheit und der dritten Leistungshalbleiterschalteinheit mit dem Potenzialpunkt zwischen den Energiespeichereinheiten verbindet, wobei die erste Verbindungszweigdiode und die zweite Verbindungszweigdiode gegensinnig zueinander orientiert sind.

Ausgehend von dem eingangs genannten Umrichter löst die Erfindung diese Aufgabe durch die Verwendung eines oben genannten Submoduls.

Erfindungsgemäß weist das Submodul eines modularen Mehrstufenumrichters, das als so genanntes Doppelmodul ausgestaltet ist, nicht - wie beim Stand der Technik - vier Leistungshalbleiterschalteinheiten auf. Erfindungsgemäß wurde die Anzahl der Leistungshalbleiterschalteinheiten durch eine als Verbindungsschalteinheit bezeichnete Leistungshalbleiterschalteinheit erhöht. Somit liegt im Rahmen der Erfindung eine Reihenschaltung von insgesamt fünf Leistungshalbleiterschalteinheiten vor, die parallel zu den ebenfalls in Reihe geschalteten zwei Energiespeichern angeordnet ist. Die Anschlussklemmen sind mit dem Potenzialpunkt zwischen der ersten und zweiten bzw. vierten und fünften Leistungshalbleiterschalteinheit verbunden. Auf diese Weise sind zwischen den Anschlussklemmen einschließlich der Verbindungsschalteinheit insgesamt drei Leistungshalbleiterschalteinheiten angeordnet. Die Wahrscheinlichkeit, dass alle drei Leistungshalbleiterschalteinheiten gleichzeitig durchlegieren ist erfindungsgemäß nahezu ausgeschlossen. Erfindungsgemäß ist die Gefahr von Querzündungen daher herabgesetzt.

Von dem Potenzialpunkt zwischen der zweiten Leistungshalbleiterschalteinheit und der Verbindungsschalteinheit und von dem Potenzialpunkt zwischen der Verbindungsschalteinheit und der vierten Leistungshalbleiterschalteinheit erstreckt sich jeweils ein Verbindungszweig zum Potenzialpunkt zwischen den in Reihe geschalteten Energiespeichern hin. Dabei weisen Verbindungszweige jeweils eine Verbindungszweigdiode auf, wobei die Verbindungszweigdioden gegensinnig zueinander orientiert sind. Die Verbindungszweigdioden verhindern im Fehlerfall einen ungewollten Stromfluss durch Entladung eines der Energiespeicher. Auf diese Weise ist ein Submodul bereitgestellt, mit dem hohe Kurzschlussströme auch bei Ausfall eines der Leistungshalbleiterschalteinheiten sicher vermieden werden können.

Gemäß einer bevorzugten Ausgestaltung der Erfindung sind die erste und die zweite Anschlussklemme über wenigstens einen Halbleiterbrückenschalter miteinander verbunden. Der Halbleiterbrückenschalter dient zum Überbrücken des Submoduls im Falle von hohen Stoßströmen.

Zweckmäßigerweise ist zwischen der ersten und der zweiten Anschlussklemme zusätzlich ein mechanischer Brückenschalter vorgesehen. Der mechanische Brückenschalter dient zum Überbrücken des Submoduls im Fehlerfall. Das Submodul ist üblicherweise Teil einer Reihenschaltung eines Phasenmoduls eines Umrichters. Durch die Überbrückung eines fehlerhaften Submoduls kann das Phasenmodul weiter betrieben werden. Lediglich das fehlerhafte Submodul ist nach seiner Überbrückung auszutauschen. Der mechanische Schalter weist eine ausreichend hohe Stromtragfähigkeit auf, so dass auch bei längerem Weiterbetrieb des Umrichters eine Zerstörung des Halbleiterbrückenschalters vermieden ist.

Zweckmäßigerweise sind in dem ersten und dem zweiten Verbindungszweig Strombegrenzer angeordnet. Die Strombegrenzer reduzieren einen Stromfluss, wenn das Steuern der Leistungshalbleiterschalteinheiten nicht exakt synchronisiert ist. Zweckmäßigerweise sind die Strombegrenzer ohmsche Widerstände.

Gemäß einer bevorzugten Ausgestaltung der Erfindung weist jede Leistungshalbleiterschalteinheit und die Verbindungsschalteinheit jeweils einen an- und abschaltbaren Leistungshalbleiterschalter sowie eine dazu gegensinnig parallel angeordnete Freilaufdiode auf. An- und abschaltbare Leistungshalbleiterschalter sind beispielsweise IGBTs, GTOs oder dergleichen. IGBTs werden durch entsprechende Steuersignale, die sie von einer Regelungseinheit erhalten, von einer Durchlassstellung, in der sie einen Stromfluss in ihrer Durchlassrichtung ermöglichen, in eine Sperrstellung überführt, in der ein Stromfluss unterbrochen ist. Parallel zum an- und abschaltbaren Leistungshaltleiterschalter ist eine gegensinnige Freilaufdiode angeordnet, so dass hohe Spannungsspitzen beim Abschalten von Strömen durch den an- und abschaltbaren Leistungshalbleiter vermieden sind.

Bei einer hiervon abweichenden Ausgestaltung der Erfindung sind die Leistungshalbleiterschalteinheit und die Verbindungseinheit jeweils rückwärts leitende an- und abschaltbare Leistungshalbleiterschalter. Rückwärts leitende Leistungshalbleiterschalter, wie beispielsweise rückwärts leitende IGBTs, sind dem Fachmann bekannt, so dass an dieser Stelle hierauf nicht genauer eingegangen zu werden braucht. Der Vorteil bei der Verwendung eines rückwärts leitenden Leistungshalbleiterschalters ist darin zu sehen, dass die gegensinnig parallele Freilaufdiode entfallen kann.

Als Leistungshalbleiterschalter ist im Rahmen der Erfindung ein markterhältlicher Leistungshalbleiterschalter gemeint, die derzeit eine Spannungsfestigkeit von 3,3 kV oder sogar 6,5 kV aufweisen. Leistungshalbleiterschalter weisen in der Regel ein Gehäuse auf, in denen Leistungshalbleiterchips, beispielsweise über Bonddrähte oder über Flächenkontakt, miteinander verbunden sind. Solche Leistungshalbleiterschalter sind dem Fachmann jedoch ebenfalls bekannt.

Weitere zweckmäßige Ausgestaltungen und Vorteile der Erfindung sind Gegenstand der nachfolgenden Beschreibung von Ausführungsbeispielen der Erfindung unter Bezug auf die Figuren der Zeichnung, wobei gleiche Bezugszeichen auf gleichwirkende Bauteile verweisen und wobei
- Figur 1: ein erstes Ausführungsbeispiel eines erfindungsgemäßen Submoduls und
- Figur 2: ein weiteres Ausführungsbeispiel des erfindungsgemäßen Submoduls verdeutlichen.

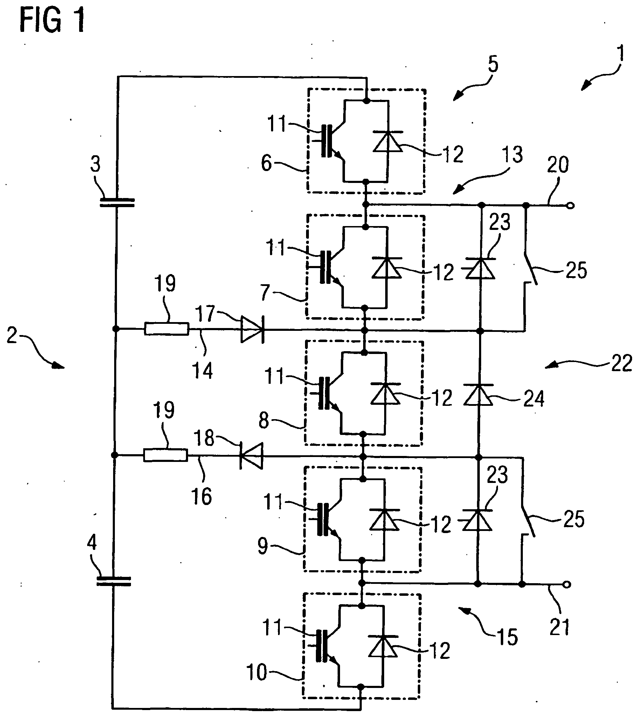

Figur 1 zeigt ein Ausführungsbeispiel des erfindungsgemäßen Submoduls 1. Das Submodul 1 weist eine Energiespeicherreihenschaltung 2 aus einem ersten Energiespeicher 3 sowie einem zweiten Energiespeicher 4 auf. Parallel zur Energiespeicherreihenschaltung 2 ist eine Halbleitergesamtreihenschaltung 5 vorgesehen, die aus einer ersten Leistungshalbleiterschalteinheit 6, einer zweiten Leistungshalbleiterschalteinheit 7, einer Verbindungsschalteinheit 8, einer dritten Leistungshalbleiterschalteinheit 9 und einer vierten Leistungshalbleiterschalteinheit 10 besteht. Jede Leistungshalbleiterschalteinheit 6, 7, 8, 9, und die Verbindungsschalteinheit 8 weisen einen IGBT 11 als an- und abschaltbaren Leistungshalbleiterschalter auf, der eine Durchlassrichtung aufweist, die durch einen Pfeil gekennzeichnet ist. Durch entsprechende Steuersignale einer figürlich nicht dargestellten Regelungseinheit kann der jeweilige IGBT 11 von seiner Durchlassstellung in seine Sperrstellung überführt werden. Parallel zu jedem IGBT 11 ist eine gegensinnig zu seiner Durchlassrichtung orientierte Freilaufdiode 12 angeordnet. Die erste Leistungshalbleiterschalteinheit 6 und die zweite Leistungshalbleiterschalteinheit 7 bilden eine erste Halbleiterreihenschaltung 13 aus, die über einen ersten Verbindungszweig 14 mit dem Potenzialpunkt zwischen den Energiespeichen 3 und 4 verbunden ist. Die erste Halbleiterreihenschaltung ist somit dem ersten Energiespeicher 3 parallel geschaltet. Der Verbindungszweig 14 verbindet den Potenzialpunkt zwischen den Energiespeichern 3 und 4 mit dem Potenzialpunkt zwischen der ersten Reihenschaltung 13 und der Verbindungsschalteinheit 8.

Die Verbindungsschalteinheiten 9 und 10 bilden eine zweite Halbleiterreihenschaltung 15 aus, die über einen zweiten Verbindungszweig 16 mit dem Potenzialpunkt zwischen den Energiespeichern 3 und 4 verbunden ist. Der zweite Verbindungszweig 16 verbindet somit den Potenzialpunkt zwischen den Energiespeichern 3 und 4 mit dem Potenzialpunkt zwischen der zweiten Halbleiterreihenschaltung 15 und der Verbindungsschalteinheit 8.

Der erste Verbindungszweig 14 weist eine erste Verbindungszweigdiode 17 und der zweite Verbindungszweig 16 eine zweite Verbindungszweigdiode 18 auf, die gegensinnig zur ersten Verbindungszweigdiode 17 orientiert ist. Ferner ist in jedem Verbindungszweig 14 bzw. 16 ein ohmscher Widerstand 19 angeordnet.

Das Submodul 1 ist zweipolig ausgestaltet und weist somit eine erste Anschlussklemme 20 sowie eine zweite Anschlussklemme 21 auf. Die erste Anschlussklemme 20 ist mit dem Potenzialpunkt zwischen der ersten Leistungshalbleiterschalteinheit 6 und der zweiten Leistungshalbleiterschalteinheit 7 verbunden. Die zweite Anschlussklemme 21 liegt auf dem Potenzial zwischen der dritten Leistungshalbleiterschalteinheit 9 und der vierten Leistungshalbleiterschalteinheit 10.

Die Anschlussklemmen 20 und 21 sind im Fehlerfall durch eine Reihenschaltung 22 überbrückbar, die aus zwei ansteuerbaren Leistungshalbleitern 23 sowie eine zwischen diese angeordnete Diode 24 besteht. Die ansteuerbaren Leistungshalbleiterschalter 23 überbrücken die zweite bzw. dritte Leistungshalbleiterschalteinheit. Ihnen ist jeweils ein mechanischer Schalter 25 parallel geschaltet.

Die Verbindungsschalteinheit 8 wird gemeinsam mit den Leistungshalbleiterschalteinheiten 7 und 9 an- und abgeschaltet. Dies gilt auch für die Leistungshalbleiterschalteinheiten 6 und 10. An den Anschlussklemmen 20 und 21 fällt somit die an beiden Energiespeichern 3 und 4 gemeinsam abfallende Kondensatorspannung oder aber eine Nullspannung ab.

Wenn die beiden äußeren Leistungshalbleiterschalteinheiten, also die Leistungshalbleiterschalteinheiten 6 und 10, immer gleichzeitig eingeschaltet werden und wenn die inneren Leistungshalbleiterschalteinheiten 7, 8 und 9 immer gleichzeitig geschaltet werden, führen die Verbindungszweige 14 und 16 im Idealfall keinen Strom. Eine solche genaue zeitliche Synchronisation ist in der Regel jedoch nicht möglich, so dass es zu leichten Abweichungen hinsichtlich der Schaltzeiten und daher zu einem Stromfluss über die Verbindungszweige 14 und 16 kommt. Dieser Stromfluss wird durch die ohmschen Widerstände 19 begrenzt.

Aus Figur 1 ist erkennbar, dass zwischen den Anschlussklemmen 20 und 21 insgesamt drei Leistungshalbleiterschalteinheiten 7, 8 und 9 angeordnet sind. Ein gleichzeitiges Durchlegieren oder Ausfall aller drei Leistungshalbleiterschalteinheiten ist unwahrscheinlich, so dass ein Kurzschluss zwischen den Anschlussklemmen 20, 21, also Querzünden des erfindungsgemäßen Submoduls weitestgehend vermieden ist. Die Verbindungszweigdioden 17, 18 verhindern eine ungewollte Entladung der Kondensatoren 3 oder 4 bei Ausfall einer der Leistungshalbleiterschalteinheiten 7 oder 9.

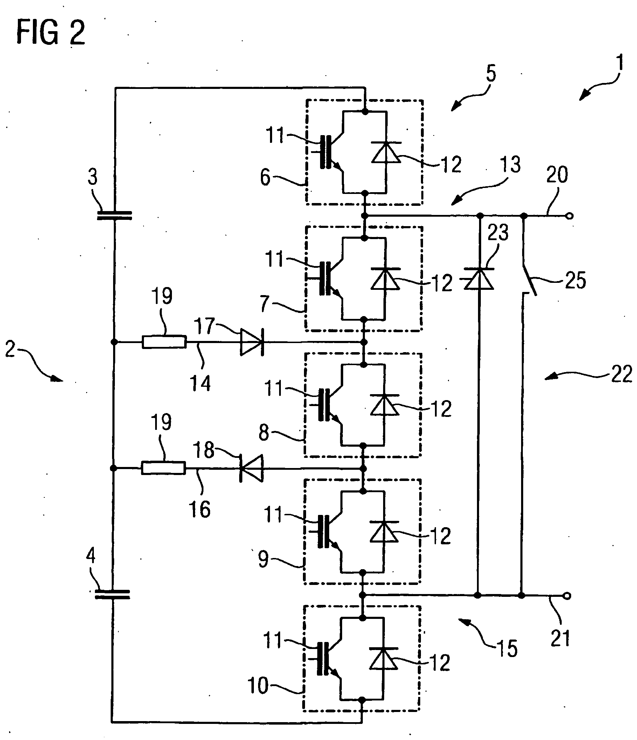

Figur 2 zeigt ein weiteres Ausführungsbeispiel des erfindungsgemäßen Submoduls 1, das dem im Figur 1 gezeigten Submodul 1 im Wesentlichen entspricht. Im Gegensatz zu dem in Figur 1 dargestellten Ausführungsbeispielen ist jedoch nur ein Halbleiterschalter 23 vorgesehen, der die Anschlussklemmen 20 und 21 direkt miteinander verbindet. Parallel zu dem Halbleiterschalter 23 ist wieder ein mechanischer Kurzschlussschalter 25 vorgesehen.

## Patentansprüche

1. Zweipoliges Submodul (1) zur Reihenschaltung in einem Umrichter im Hochspannungsbereich mit
- einem ersten Energiespeicher (3),
- einer parallel zum ersten Energiespeicher (3) geschalteten ersten Halbleiterreihenschaltung (13) aus einer ersten (6) und einer zweiten (7) an- und abschaltbaren Leistungshalbleiterschalteinheit,
- einer ersten Anschlussklemme (20), die mit dem Potenzialpunkt zwischen der ersten und zweiten Leistungshalbleiterschalteinheit (6,7) verbunden ist,
- einem zweiten Energiespeicher (4), der in Reihe zum ersten Energiespeicher (3) angeordnet ist,
- einer parallel zum zweiten Energiespeicher (4) angeordneten zweiten Halbleiterreihenschaltung (15) aus einer dritten (9) und vierten (10) an- und abschaltbaren Leistungshalbleiterschalteinheit und
- einer zweiten Anschlussklemme (21), die mit dem Potenzialpunkt zwischen der dritten (9) und vierten (10) Leistungshalbleitereinheit verbunden ist,
**gekennzeichnet durch**,
- eine Verbindungsschalteinheit (8), die zwischen der ersten Halbleiterreihenschaltung (13) und der zweiten Halbleiterreihenschaltung (15) angeordnet ist,
- einen ersten Verbindungszweig (14), der eine erste Verbindungszweigdiode (17) aufweist und den Potenzialpunkt zwischen der Verbindungsschalteinheit (18) und der zweiten Leistungshalbleiterschalteinheiten (7) mit dem Potenzialpunkt zwischen den Energiespeichern (3,4) verbindet, und
- einen zweiten Verbindungszweig (16), der eine zweite Verbindungszweigdiode (18) aufweist und den Potenzialpunkt zwischen der Verbindungsschalteinheit (8) und der dritten Leistungshalbleiterschalteinheit (9) mit dem Potenzialpunkt zwischen den Energiespeichereinheiten (3,4) verbindet ist, wobei die erste Verbindungszweigdiode (17) und die zweite Verbindungszweigdiode (18) gegensinnig zueinander orientiert sind.

2. Submodul (1) nach Anspruch 1,
**dadurch gekennzeichnet, dass**
die erste und die zweite Anschlussklemme (20,21) über wenigstens einen Halbleiterbrückenschalter (23) miteinander verbunden sind.

3. Submodul (1) nach Anspruch 2,
**dadurch gekennzeichnet, dass**
die erste und die zweite Anschlussklemme (20,21) über wenigstens einen mechanischen Brückenschalter (25) miteinander verbunden sind.

4. Submodul (1) nach einem der vorhergehenden Ansprüche,
**dadurch gekennzeichnet, dass**
in dem ersten und dem zweiten Verbindungszweig (14,16) Strombegrenzer (19) angeordnet sind.

5. Submodul (1) nach Anspruch 4,
**dadurch gekennzeichnet, dass**
die Strombegrenzer Ohmsche Widerstände (19) sind.

6. Submodul (1) nach einem der vorhergehenden Ansprüche,
**dadurch gekennzeichnet, dass**
jede Leistungshalbleiterschalteinheit (6,7,8,9) und die Verbindungsschalteinheit (8) jeweils einen an- und abschaltbaren Leistungshalbleiterschalter (11) sowie eine dazu gegensinnig parallel angeordnete Freilaufdiode (12) aufweisen.

7. Submodul (1) nach einem der vorhergehenden Ansprüche,
**dadurch gekennzeichnet, dass**
jede Leistungshalbleiterschalteinheit (6,7,8,9) und die Verbindungsschalteinheit (8) jeweils als ein rückwärts leitender an- und abschaltbarer Leistungshalbleiterschalter ausgestaltet sind.

8. Umrichter für den Hochspannungsbereich zum Umrichten einer elektrischen Spannung oder eines elektrischen Stromes mit Phasenmodulen, die sich zwischen zwei Gleichspannungsanschlüssen erstrecken und jeweils einen Wechselspannungsanschluss zum Anschluss einer Phase an eines Wechselspannungsnetzes aufweisen, wobei wenigstens eines der Phasenmodule eine Reihenschaltung von zweipoligen Submodulen (1) aufweist,
**gekennzeichnet durch**
ein Submodul (1) gemäß einem der vorhergehenden Ansprüche.

## Claims

1. Two-pole submodule (1) for series connection in a converter in the high-voltage range comprising
- a first energy store (3),
- a first semiconductor series circuit (13) comprising a first (6) and a second (7) power semiconductor switching unit which can be turned on and off, said first semiconductor series circuit being connected in parallel with the first energy store (3),
- a first connecting terminal (20), which is connected to the potential point between the first and second power semiconductor switching units (6, 7),
- a second energy store (4), which is arranged in series with the first energy store (3),
- a second semiconductor series circuit (15) comprising a third (9) and fourth (10) power semiconductor switching unit which can be turned on and off, said second semiconductor series circuit being arranged in parallel with the second energy store (4), and
- a second connecting terminal (21), which is connected to the potential point between the third (9) and fourth (10) power semiconductor units,
**characterized by**
- a connection switching unit (8), which is arranged between the first semiconductor series circuit (13) and the second semiconductor series circuit (15),
- a first connection branch (14), which comprises a first connection branch diode (17) and connects the potential point between the connection switching unit (18) and the second power semiconductor switching unit (7) to the potential point between the energy stores (3, 4),
- a second connection branch (16), which comprises a second connection branch diode (18) and connects the potential point between the connection switching unit (8) and the third power semiconductor switching unit (9) to the potential point between the energy store units (3, 4), wherein the first connection branch diode (17) and the second connection branch diode (18) are oriented in opposite directions with respect to one another.

2. Submodule (1) according to Claim 1,
**characterized in that**
the first and second connecting terminals (20, 21) are connected to one another via at least one semiconductor bridge switch (23).

3. Submodule (1) according to Claim 2,
**characterized in that**
the first and second connecting terminals (20, 21) are connected to one another via at least one mechanical bridge switch (25).

4. Submodule (1) according to any of the preceding claims,
**characterized in that**
current limiters (13) are arranged in the first and second connection branches (14, 16).

5. Submodule (1) according to Claim 4,
**characterized in that**
the current limiters are ohmic resistors (19).

6. Submodule (1) according to any of the preceding claims,
**characterized in that**
each power semiconductor switching unit (6, 7, 8, 9) and the connection switching unit (8) in each case comprise a power semiconductor switch (11) which can be turned on and off and also a freewheeling diode (12) arranged in parallel and in the opposite direction with respect thereto.

7. Submodule (1) according to any of the preceding claims,
**characterized in that**
each power semiconductor switching unit (6, 7, 8, 9) and the connection switching unit (8) are in each case designed as a reverse conducting power semiconductor switch which can be turned on and off.

8. Converter for the high-voltage range for converting an electric voltage or an electric current comprising phase modules which extend between two DC voltage connections and in each case comprise an AC voltage connection for connecting a phase to an AC voltage power supply system, wherein at least one of the phase modules comprises a series circuit formed by two-pole submodules (1),
**characterized by**
a submodule (1) according to any of the preceding claims.

## Revendications

1. Sous-module (1) bipolaire pour le montage en série dans un convertisseur dans le domaine de la haute tension, comprenant
- un premier accumulateur (3) d'énergie,
- un premier circuit (13) série à semiconducteur monté en parallèle au premier accumulateur (3) d'énergie et composé d'une première (6) et d'une deuxième (7) unités de circuit de puissance à semiconducteur pouvant être fermées et ouvertes,
- une première borne (20) de raccordement, qui est reliée au point de potentiel entre la première et la deuxième unités (6, 7) de circuit de puissance à semiconducteur,
- un deuxième accumulateur (4) d'énergie, qui est monté en série avec le premier accumulateur (3) d'énergie,
- un deuxième circuit (15) série à semiconducteur monté en parallèle au deuxième accumulateur (4) d'énergie et composé d'une troisième (9) et d'une quatrième (10) unités de circuit de puissance à semiconducteur pouvant être fermées et ouvertes et
- une deuxième borne (21) de raccordement, qui est reliée au point de potentiel entre la troisième (9) et la quatrième (10) unités de circuit de puissance à semiconducteur,
**caractérisé par**
- une unité (8) de circuit de liaison, qui est montée entre le premier circuit (13) série à semiconducteur et le deuxième circuit (15) série à semiconducteur,
- une première branche (14) de liaison, qui a une première diode (17) de branche de liaison et qui relie le point de potentiel entre l'unité (18) de circuit de liaison et les deuxièmes unités (7) de circuit de puissance à semiconducteur au point de potentiel entre les accumulateurs (3, 4) d'énergie et
- une deuxième branche (16) de liaison, qui a une deuxième diode (18) de branche de liaison et qui relie le point de potentiel entre l'unité (8) de circuit de liaison et la troisième unité (9) de circuit de puissance à semiconducteur au point de potentiel entre les unités (3, 4) d'accumulateur d'énergie, la première diode (17) de branche de liaison et la deuxième diode (18) de branche de liaison étant montées tête-bêche l'une par rapport à l'autre.

2. Sous-module (1) suivant la revendication 1,
**caractérisé en ce que**
la première et la deuxième bornes (20, 21) de raccordement sont reliées entre elles par au moins un interrupteur (23) en pont à semiconducteur.

3. Sous-module (1) suivant la revendication 2,
**caractérisé en ce que**
la première et la deuxième bornes (20, 21) de raccordement se relient entre elles par au moins un interrupteur (25) en pont mécanique.

4. Sous-module (1) suivant l'une des revendications précédentes,
**caractérisé en ce que**
des limiteurs (19) de courant sont montés dans la première et dans la deuxième branches (14, 16) de liaison.

5. Sous-module (1) suivant la revendication 4,
**caractérisé en ce que**
les limiteurs de courant sont des résistances (19) ohmiques.

6. Sous-module (1) suivant l'une des revendications précédentes,
**caractérisé en ce que**
chaque unité (6, 7, 8, 9) de circuit de puissance à semiconducteur et l'unité (8) de circuit de liaison ont chacune un interrupteur (11) de puissance à semiconducteur pouvant être fermé et ouvert, ainsi qu'une diode (12) de roue libre montée en parallèle à lui tête-bêche.

7. Sous-module (1) suivant l'une des revendications précédentes,
**caractérisé en ce que**
chaque unité (6, 7, 8, 9) de circuit de puissance à semiconducteur et l'unité (8) de circuit de liaison sont conformées chacune sous la forme d'un interrupteur de puissance à semiconducteur pouvant être fermé et ouvert à conduction inverse.

8. Convertisseur pour le domaine de la haute tension pour transformer une tension électrique ou un courant électrique, comprenant des modules de phase, qui s'étendent entre deux bandes de tension continue et qui ont chacun une borne de tension alternative pour le raccordement d'une phase à un réseau de tension alternative, dans lequel au moins l'un des modules de phase a un circuit série de deux sous-modules (1) bipolaires,
**caractérisé par**
un sous-module (1) suivant l'une des revendications précédentes.
